(19) Europäisches Patentamt
European Patent Office
Office européen des brevets

(11) Publication number: **0 170 249 B1**

# (12) EUROPEAN PATENT SPECIFICATION

(45) Date of publication of patent specification: **27.12.91** (51) Int. Cl.5: **C03B 37/018**

(21) Application number: **85109542.2**

(22) Date of filing: **30.07.85**

## (54) Method for producing glass preform for optical fiber.

(30) Priority: **30.07.84 JP 157616/84**

(43) Date of publication of application:
**05.02.86 Bulletin 86/06**

(45) Publication of the grant of the patent:
**27.12.91 Bulletin 91/52**

(84) Designated Contracting States:
**DE FR GB**

(56) References cited:
**GB-A- 2 067 180**
**US-A- 3 933 454**
**US-A- 4 125 388**

**SIXTH EUROPEAN CONFERENCE ON OPTICAL COMMUNICATION, University of York, GB, 16th-19th September 1980, pages 18-21; T. MORIYAMA et al.: "Fabrication of ultra-low-OH content optical fibers with VAD method"**

(73) Proprietor: **SUMITOMO ELECTRIC INDUSTRIES LIMITED**
**No. 15, Kitahama 5-chome, Higashi-ku**
**Osaka-shi, Osaka 541(JP)**

(72) Inventor: **Kyoto, Michihisa c/o Yokohama Works**
**Sumitomo Electric Industries, Ltd. 1, Taya-cho**
**Totsuka-ku Yokohama-shi Kanagawa(JP)**
Inventor: **Watanabe, Minoru c/o Yokohama Works**
**Sumitomo Electric Industries, Ltd. 1, Taya-cho**
**Totsuka-ku Yokohama-shi Kanagawa(JP)**
Inventor: **Ishiguro, Yoichi c/o Yokohama Works**
**Sumitomo Electric Industries, Ltd. 1, Taya-cho**
**Totsuka-ku Yokohama-shi Kanagawa(JP)**

(74) Representative: **Eitle, Werner, Dipl.-Ing. et al**
**Hoffmann, Eitle & Partner Patentanwälte Arabellastrasse 4**
**W-8000 München 81(DE)**

**EP 0 170 249 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method for producing a glass preform for an optical fiber. More particularly, it relates to a method for producing a glass preform for use in the fabrication of an optical fiber containing smaller amounts of impurities and having improved attenuation of light transmission and mechanical strength.

Methods suitable for mass production of a glass preform for use in the fabrication of an optical fiber include a vapor-phase axial deposition method (hereinafter referred to as "VAD method") and an outside vapor-phase deposition method (hereinafter referred to as "OVPD method"). These deposition methods comprise flame hydrolyzing a glass raw material such as $SiCl_4$ optionally containing an additive (e.g. $GeO_2$) in an oxyhydrogen flame to form fine glass particles of pure quartz ($SiO_2$) or quartz containing the additive, depositing the fine glass particles on a starting member to produce a porous preform consisting of a fine glass particle mass (which is also referred to as "soot preform" or "soot mass") and then heating and sintering the porous preform at a high temperature to obtain a transparent preform, namely a glass preform.

In the VAD method, the fine glass particles are deposited on the rotating starting member in parallel with the rotating axis of the member so as to continuously produce a solid cylindrical porous preform (cf. U.S. Patent No. 4,135,901). In the OVPD method, plural layers of the fine glass particles are formed on a rotating rod made of, for example, alumina and quartz glass from a direction perpendicular to the rotating axis of the rod to produce a cylindrical porous preform around the rod (cf. U.S. Patent Nos. 3,711,262, 3,737,292 and 3,737,293). The thus produced porous preform is heated and sintered at a high temperature in an atmosphere of an inert gas such as helium so as to convert it into a transparent glass preform.

A practically used optical fiber is required to have low attenuation of light transmission, and it is essential for the optical fiber to have total attenuation of light transmission not larger than 1 dB/km at a wavelength of 1.30 micrometer which is used for long-distance optical telecommunication. To this end, an amount of residual water in the optical fiber, which absorbs light with a wavelength of 1.38 micrometer and thus influences light transmission at a wavelength of 1.30 micrometer, should be decreased as much as possible. Fig. 1 shows a relationship between the amount of residual water (ppm) in the optical fiber and increase of attenuation of light transmission at a wavelength of 1.30 micrometer (dB/km). As is seen from Fig. 1, the amount of the residual water should be less than 0.3 ppm to achieve the attenuation of less than 0.3 dB/km.

Since the theoretical lower limit of the attenuation of light transmission at a wavelength of 1.30 micrometer attributed to glass itself is 0.3 to 0.4 dB/km, the total attenuation at this wavelength amounts 0.6 to 0.7 dB/km.

Therefore, it is necessary to reduce attenuation of light transmission attributed to other factors, particularly absorption by impurities such as transition metals (e.g. copper and iron) which induce large attenuation.

Table 1 shows an amount of impurity element which causes 20 dB/km of attenuation of light transmission at a wavelength of 0.8 micrometer.

Table 1

| Element | Amount (ppb) |
|---|---|
| V | 19 |
| Cr | 33 |
| Mn | 833 |
| Fe | 425 |
| Co | 816 |
| Ni | 712 |
| Cu | 9 |

As is seen from Table 1, it is necessary to reduce the amount of the impurities to less than 1 ppb in order to decease attenuation of light transmission of the optical fiber.

In addition, the optical fiber used for long-distance optical telecommunication should be an elongate one with improved mechanical strength. In view of the mechanical strength, contamination of the glass preform

with alkali metal materials such as magnesium oxide is not preferred since such materials would devitrify the glass preform surface and deteriorate water resistance of the preform. This is understood from the fact that strength of the multi-component type optical fiber containing a large amount of alkali metal is deteriorated as time passes and the deterioration of the strength is more serious in an atmosphere containing much water. For example, tensile strength at break of a multi-component type optical fiber with an outer diameter of 150 micrometers is 3-5 $kg/cm^2$, which is less than one half of that of a quartz optical fiber (cf. Noda et al, "Optical Fiber Transmission" (1981) 116, Edited by Denshitsushin Gakkai).

As discussed in the above, following factors are met to produce an optical fiber to be used for long-distance telecommunication at a wavelength of 1.30 micrometer with attenuation of light transmission of less than 1 dB/km:

For decrease of attenuation of light transmission:

(1) The amount of residual water should be less than 0.3 ppm.

(2) The content of transition metal such as copper and iron should be less than 1 ppb.

For improvement of mechanical strength:

(3) Contamination of the glass preform surface with alkali metal such as magnesium should be prevented.

Although the factors (1) and (2) have been discussed to decrease attenuation of light transmission, any conventional method does not satisfy both factors (1) and (2). Much less, any method for satisfying the factor (3) has not been proposed.

In the method for producing the glass preform utilizing flame hydrolysis for synthesizing the fine glass particles, since a part of unreacted water contaminates the soot preform to some extent, dehydration of the soot preform is required. The dehydration is carried out before or simultaneously with the sintering of the soot preform at a high temperature in an atmosphere containing chlorine. For example, the porous preform produced by the OVPD method is simultaneously dehydrated and sintered by gradually introducing it from its one end in a furnace having a helium atmosphere containing chlorine kept at about 1,500 °C. An optical fiber fabricated from the thus dehydrated glass preform has attenuation characteristics as shown by Curve A in Fig. 2. When chlorine is not contained in the dehydrating atmosphere, an optical fiber fabricated has attenuation characteristics as shown by Curve B in Fig. 2 (cf. U.S. Patent No. 3,993,454). As understood from Fig. 2, when the preform is dehydrated in the presence of chlorine, the absorption at a wavelength of 0.95 micrometer due to residual water disappear. This means that the amount of residual water is less than 1 ppm. However, a broad absorption around a wavelength of 0.90 micrometer, which may be caused by divalent iron or copper ion, appears. An optical fiber with such broad absorption cannot be expected to have attenuation of light transmission less than 1 dB/km at a wavelength of 1.30 micrometer.

In order to overcome the drawbacks of the method disclosed in U.S. Patent No. 3,993,454, U.S. Patent No. 4,165,223 discloses a method to dehydrate the soot preform with suppressing the contamination with impurities. By this method, a hollow cylindrical porous preform produced by the OVPD method is dehydrated and sintered with flowing an inert gas containing chlorine through a cavity of the hollow cylindrical preform and simultaneously flowing an inert gas over an outer surface of the preform. By flowing the inert gas over the outer surface, the impurities present on a furnace wall, particularly those forming chlorides such as $FeCl_2$ and $CuCl_2$ are prevented to permeate into the soot preform.

However, in the soot preform containing $GeO_2$, $GeO_2$ reacts with chlorine as follows:

$$GeO_2 + 2Cl_2 \rightarrow GeCl_4 \uparrow + O_2$$

and formed $GeCl_4$ dissipates so that the distribution of $GeO_2$ may varied. To prevent the above reaction of $GeO_2$ with chlorine, oxygen is added in view of the equilibrium of the above reaction. It had been found by the present inventors that when oxygen is added in an amount larger than 40 % by volume based on the sintering atmospheric gas, many bubbles are formed in the glass preform. Further, when chlorine is used in an mount of 2 % by volume or more based on the volume of the sintering atmospheric gas, many bubbles are also formed. If the glass preform contains only one bubble any practically usable optical fiber is not fabricated from such glass preform. It is also found that, in the above procedure, formed $GeCl_4$ is again accumulated on the glass preform and changes the distribution of $GeO_2$ along the fiber length.

Furthermore, in the atmosphere surrounding to the outer surface of the porous preform, chlorine is not scarcely present in the form of active chlorine but is present in the form of hydrogen chloride Therefore, a considerable amount of water vapor is present in the sintering atmosphere and reacts with an alkaline component such as MgO according the following reaction formula:

$$MgO\ (s) + H_2O\ (g) \rightarrow Mg(OH)_2\ (g)$$

wherein (s) and (g) stand for solid and gaseous states, respectively. The thus formed $Mg(OH)_2$ adheres to the outer surface of the porous preform, and is converted to MgO and re-contained in the peripheral portion of the preform. When an optical fiber fabricated from the MgO-containing preform is exposed to a moisture-containing atmosphere, MgO on the fiber surface reacts with water to form $Mg(OH)_2$ which exudes from the fiber and leaves micro-defects in the fiber surface. Such defects tend to deteriorate the mechanical strength of the fiber. This mechanism is affirmed by the fact that the surface of the transparent glass preform is devitrified when it is sintered in a muffle tube made of some kinds of materials, and that it is more severely devitrified in the muffle tube made of a material containing a larger amount of MgO.

In addition, if the outer periphery of the porous preform is surrounded by the inert gas atmosphere, it is not sufficiently dehydrated but the amount of residual water cannot be decreased to 0.3 ppm or less.

The above methods are applied for the porous preform produced by the OVPD methods and cannot be applied to the solid cylindrical porous preform produced by the VAD method.

One object of the present invention is to provide a method for producing a glass preform for an optical fiber, in which the porous preform is dehydrated and made transparent while chlorine is distributed throughout the preform.

Another object of the present invention is to provide a method for producing a glass preform for an optical fiber by which contamination with impurities is prevented and an amount of residual water is decreased to 0.3 % or less during dehydrating and sintering the porous preform.

These and other objects are achieved by a method for producing a glass preform for an optical fiber comprising:

making a porous preform by a VAD method:

dehydrating the porous preform in an atmosphere comprising chlorine or a chlorine-containing compound and

sintering the porous preform to produce a transparent glass preform,

wherein the dehydration step and the sintering step are carried out in a muffle tube made of quartz - which contains:

(a) MgO and $Na_2O$ in a total amount of not larger than 0.2 percent by weight,

(b) $Fe_2O_3$ in an amount of not larger than 0.03 percent by weight, and

(c) copper in an amount of not larger than 0.3 ppm, and the muffle tube is preheated in an atmosphere comprising chlorine before inserting the porous preform into said muffle tube, and then the dehydration step and the sintering step are carried out.

In this method, dehydration and sintering of the porous preform can be simultaneously carried out in the same muffle tube.

Fig. 1 is a graph showing a relationship between the amount of residual water in the optical fiber and increase of attenuation of light transmission at a wavelength of 1.30 micrometer,

Fig. 2 is a graph showing attenuation of light transmission at various wavelengths,

Fig. 3 shows flow rates of helium and chlorine,

Fig. 4 schematically shows an apparatus used in the Example.

According to the present invention, the porous preform, namely the fine glass particle mass, is produced by a VAD method.

The porous preform is dehydrated in a furnace containing an atmosphere comprising an inert gas and chlorine or a chlorine-containing compound (e.g. $SOCl_2$, $CCl_4$, etc.), preferably chlorine, in an amount of 0.05 to 2 % by volume. The muffle tube made of quartz separates a heater such as a carbon heater of the furnace and the sintering atmosphere to prevent the preform from being contaminated with impurities from the heater and/or an insulator material.

However, if copper is contained in the quartz muffle tube, it easily reacts with chlorine or the chlorine-containing compound according to the following chemical equation:

$$CuO \xrightarrow{Cl_2} Cu_2Cl_2$$

and the formed volatile chloride intrudes into the porous preform and deteriorates the light transmission characteristics of the fabricated optical fiber. Further, since copper diffuses in quartz glass at a high temperature, it is excluded from the muffle tube wall and contained in the glass preform.

Determination of the maximum amount of impurities in a quartz muffle tube

Following experiments have been done in order to determine maximum amounts of impurities to be contained in the quartz muffle tube at which the impurities are not substantially contained in the porous preform during dehydration and sintering.

A quartz muffle tube is much purer than, e.g. an alumina muffle tube. The amount of $Al_2O_3$, which is present in the largest amount among the impurities, is at most about 50 ppm. However, copper which is present in an amount of not larger than 0.5 ppm contaminates the porous preform during the sintering step, and the optical fiber fabricated from such the glass preform has attenuation increase due to copper.

Four porous preforms each comprising a core portion made of $SiO_2$ containing 10 % by weight of $GeO_2$ and a peripheral portion made of pure $SiO_2$ were produced by the VAD method under the same condition. Each porous preform was heated from 800 °C to 1,600 °C at a rate of 3.3 °C/min. to produce a transparent glass preform in a quartz muffle tube (No. 1 - 4) each containing impurities as shown in Table 2 which surrounded a helium atmosphere containing 2 % by volume of chlorine. Then, the glass preform was drawn at 1,900 °C to fabricate an optical fiber with a diameter of 125 micrometers.

Table 2

| Impurity (ppm) | $Al_2O_3$ | $Fe_2O_3$ | $TiO_2$ | $Na_2O$ | $K_2O$ | Cu | B |
|---|---|---|---|---|---|---|---|
| No. 1 | 60 | 4 | 5 | 4 | 3 | 0.5 | 0.3 |
| No. 2 | 50 | 2 | 3 | 3 | 2 | 0.1 | 0.1 |
| No. 3 | 40 | 2 | 2 | 2 | 1 | 0.1 | 0.1 |
| No. 4 | 50 | 2 | 3 | 3 | 2 | 0.2 | 0.1 |

Attenuation characteristics of the fabricated optical fibers were examined to find that one fabricated from the glass preform dehydrated in No. 1 muffle tube had the same attenuation characteristics as shown in Fig. 2 as Curve A and an absorption peak at a wavelength of 1.0 micrometer due to $Cu^{2+}$. In the optical fiber fabricated from the glass preform dehydrated in No. 4 muffle tube, slight absorption due to copper was observed. However, those produced from the glass preforms dehydrated in Nos. 2 and 3 muffle tube were not contaminated with copper.

From the above results, it is concluded that, to fabricate an optical fiber having low attenuation of light transmission, the amount of copper contained in the quartz muffle tube should be not larger than 0.3 ppm, preferably not larger than 0.1 ppm.

Optimum Dehydration Conditions

A porous preform comprising a core portion made of 90 % by weight of $SiO_2$ and 10 % by weight of $GeO_2$ and a cladding portion made of pure $SiO_2$ and having a core diameter/cladding diameter ratio of 50 micrometers/125 micrometers was dehydrated and sintered by gradually inserting it from its one end at a lowering rate of 12 cm/hr. in a helium atmosphere containing chlorine enclosed in No. 3 muffle tube kept at 1,650 °C.

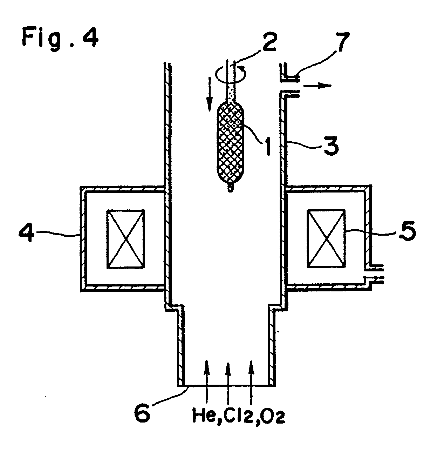

In the above dehydration step, flow rates of helium and chlorine were varied as shown in Fig. 3. In Fig. 3, X stands for conditions under which bubbles were formed in the whole preform and Δ stand for conditions under which bubbles were formed in a part of the preform. □ stands for conditions under which a transparent glass preform was produced but an optical fiber fabricated from this glass fiber contained residual water of larger than 0.3 ppm so that it had attenuation of 1 dB/km or more at a wavelength of 1.30 micrometer. O stands for conditions under which a transparent glass preform was produced and an optical fiber fabricated from this glass preform contained residual water of 0.3 ppm or less so that it had attenuation of 0.35 to 0.8 dB/km at a wavelength of 1.30 micrometer.

From the above results, it is concluded that, to fabricate an optical fiber having sufficiently low attenuation of light transmission at a wavelength of 1.30 micrometer, a flow rate ratio of chlorine and helium ($Cl_2/He$) is preferably from 0.005 to 0.02 corresponding to an area between Lines A and B.

U.S. Patent No. 4,338,111 disclosed an method for producing a glass preform for an optical fiber comprising firstly dehydrating a porous preform and then sintering it in a pure helium atmosphere to make it transparent. In this method, the muffle tube to be used should be also made of a material having the above

described purity since dehydration is carried out at a high temperature of 1,100 to 1,400 ° C.

The muffle tube is preheated in an atmosphere comprising chlorine before use because mist or dusts which may include copper, iron and/or alkali metal compounds adhere to its wall.

The present invention will be hereinafter explained further in detail by the following Example in which an apparatus shown in Fig. 4, was used.

Fig. 4 schematically shows an apparatus in which numerals 1, 2, 3, 4, 5, 6 and 7 represent a porous preform, a supporting rod which can be lowered with rotation, a muffle tube, a furnace body, a heater, an inlet for atmospheric gasses and an outlet.

Example

By the VAD method, a cylindrical porous preform comprising a core portion made of 94 % by weight of $SiO_2$ and 6 % by weight of $GeO_2$ and a cladding portion made of pure silica was produced by adjusting the conditions so as to achieve a core/cladding ratio of 10 micrometers/125 micrometers.

In a muffle tube corresponding to No. 3 muffle tube in Table 2 having an inner diameter of 175 mm and a length of 1 m, the thus produced porous preform 1 was inserted from its one end at a rate of 2 mm/min. The muffle tube 3 was heated to 1,650 ° C by the heater 4, and chlorine and helium were introduced at rates of 150 ml/min. and 15 1/min., respectively. The produced transparent glass preform having a diameter of 6 cm, a length of 25 cm and a weight of 1.5 kg was drawn in a furnace kept at 2,000 ° C to fabricate an optical fiber having a core diameter of 10 micrometers and a jacket diameter of 125 micrometers, which was coated with a coating material to obtain a coated optical fiber having an outer diameter of 0.9 mm.

Attenuation of light transmission of the optical fiber was as high as 0.3 dB/km at a wavelength of 1.30 micrometer. Although the amount of residual water was 0.1 ppm, absorption due to copper was observed, which increased attenuation at a wavelength of 1.30 micrometer.

## Claims

**1.** A method for producing a glass preform for an optical fiber comprising:
making a porous preform by a VAD method:
dehydrating the porous preform in an atmosphere comprising chlorine or a chlorine-containing compound and
sintering the porous preform to produce a transparent glass preform,
wherein the dehydration step and the sintering step are carried out in a muffle tube made of quartz which contains:
(a) MgO and $Na_2O$ in a total amount of not larger than 0.2 percent by weight,
(b) $Fe_2O_3$ in an amount of not larger than 0.03 percent by weight, and
(c) copper in an amount of not larger than 0.3 ppm, and the muffle tube is preheated in an atmosphere comprising chlorine before inserting the porous preform into said muffle tube, and then the dehydration step and the sintering step are carried out.

**2.** A method according to claim 1, wherein the dehydrating and sintering atmosphere contains 0.05 to 2 % by volume of chlorine or the chlorine-containing compound.

**3.** A method according to claim 1, wherein the dehydrating and sintering atmosphere contains chlorine.

**4.** A method according to claim 1, wherein the dehydration and sintering of the porous preform are simultaneously carried out.

## Revendications

**1.** Procédé de fabrication d'une préforme de verre pour fibre optique, comprenant :
la fabrication d'une préforme poreuse par un procédé VAD,
la déshydratation de la préforme poreuse en atmosphère contenant du chlore ou un composé contenant du chlore, et
le frittage de la préforme poreuse pour la formation d'une préforme transparente de verre,
dans lequel l'étape de déshydratation et l'étape de frittage sont réalisées dans un moufle formé de quartz qui contient :
(a) MgO et $Na_2O$ en quantité totale qui ne dépasse pas 0,2 % en poids,

(b) $Fe_2O_3$ en quantité ne dépassant pas 0,03 % en poids, et
(c) du cuivre en quantité ne dépassant pas 0,3 ppm, et le moufle est préchauffé en atmosphère contenant du chlore avant introduction de la préforme poreuse dans le moufle, et l'étape de déshydratation et l'étape de frittage sont exécutées.

**2.** Procédé selon la revendication 1, dans lequel l'atmosphère de déshydratation et de frittage contient 0,05 à 2 % en volume de chlore ou du composé contenant du chlore.

**3.** Procédé selon la revendication 1, dans lequel l'atmosphère de déshydratation et de frittage contient du chlore.

**4.** Procédé selon la revendication 1, dans lequel la déshydratation et le frittage de la préforme poreuse sont réalisés simultanément.

## Patentansprüche

**1.** Verfahren zur Herstellung einer Glasvorform für eine optische Faser, umfassend:

Herstellen einer porösen Vorform durch ein VAD-Verfahren;

Dehydrieren der porösen Vorform in einer Atmosphäre, die Chlor oder eine chlorhaltige Verbindung enthält; und

Sintern der porösen Vorform unter Herstellung einer transparenten Glasvorform;

wobei der Dehydratationsschritt und der Sinterschritt in einem Muffelrohr aus Quarz durchgeführt wird, das enthält:
(a) MgO und $Na_2O$ in einer Gesamtmenge von nicht mehr als 0,2 Gew.%;
(b) $Fe_2O_3$ in einer Menge von nicht mehr als 0,03 Gew.%; und
(c) Kupfer in einer Menge von nicht mehr als 0,3 ppm
und das Muffelrohr in einer chlorhaltigen Atmosphäre erhitzt wird, bevor die poröse Vorform in das Muffelrohr eingeführt wird und anschliessend der Dehydratationsschritt und der Sinterschritt durchgeführt werden.

**2.** Verfahren nach Anspruch 1, worin die Dehydratations- und die Sinteratmosphäre 0,05 bis 2 Vol.% Chlor oder eine chlorhaltige Verbindung enthält.

**3.** Verfahren nach Anspruch 1, worin die Dehydratations- und die Sinteratmosphäre Chlor enthältt.

**4.** Verfahren nach Anspruch 1, worin die Dehydratation und das Sintern der porösen Vorform gleichzeitig durchgeführt werden.

Fig. 1

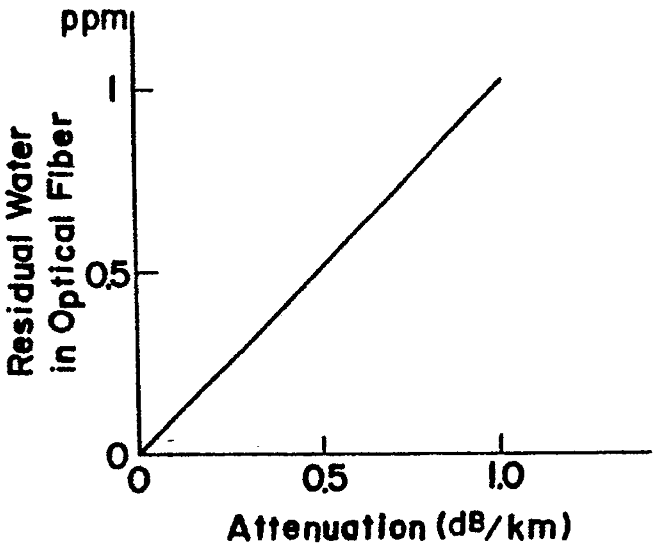
ppm
1
0.5
0
Residual Water in Optical Fiber
0
0.5
1.0
Attenuation (dB/km)

Fig. 3

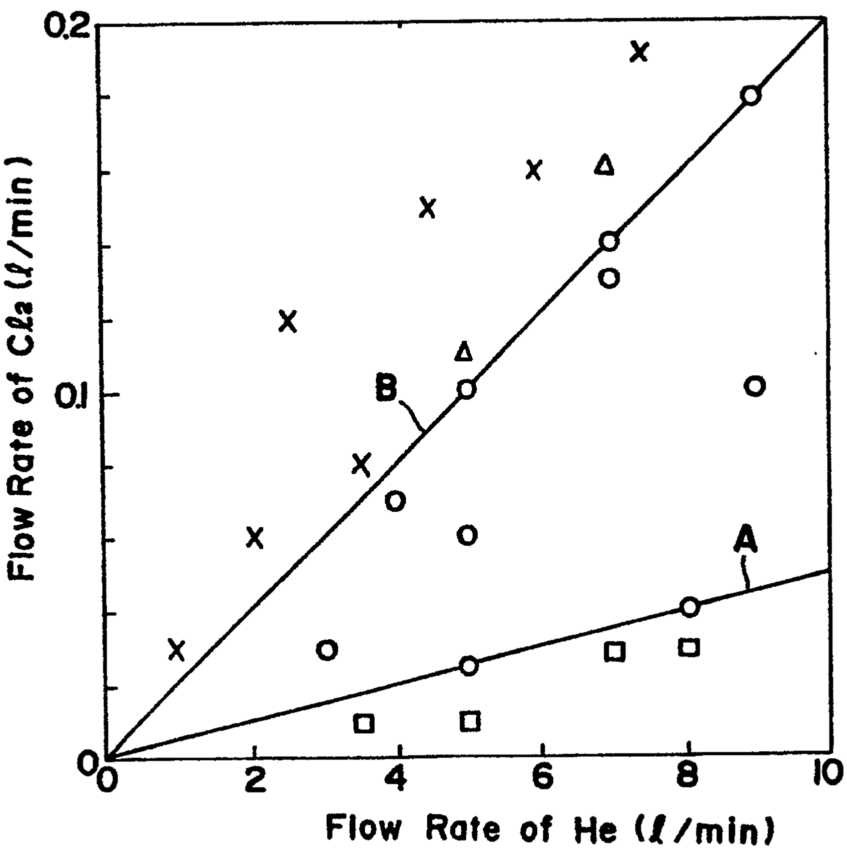
0.2
0.1
0
Flow Rate of Cl2 (l/min)
B
A
0
2
4
6
8
10
Flow Rate of He (l/min)

Fig. 2

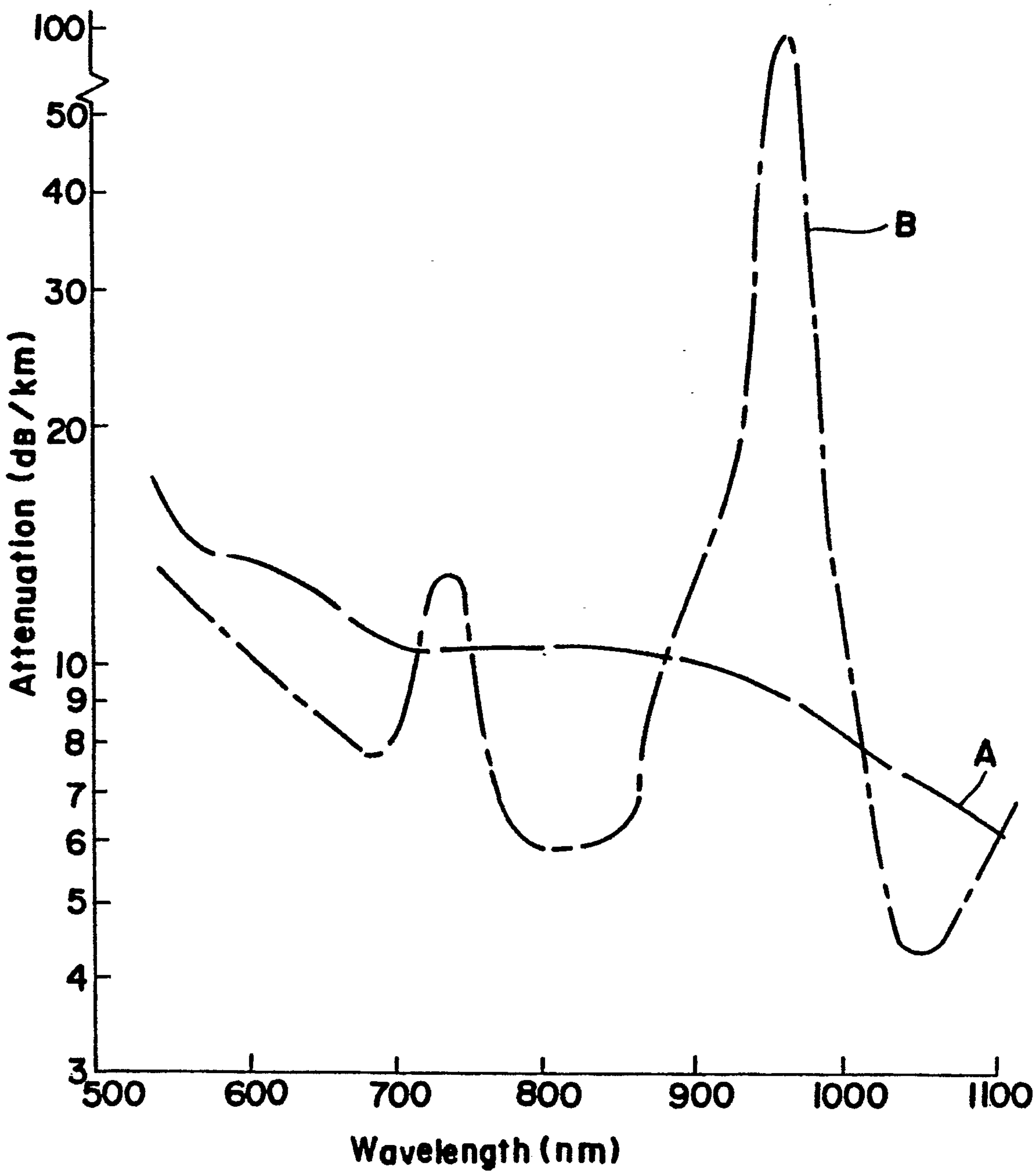
100
50
40
30
20
10
9
8
7
6
5
4
3
Attenuation (dB/km)
500
600
700
800
900
1000
1100
Wavelength (nm)
A
B

Fig. 4